(19) Europäisches Patentamt

European Patent Office

Office européen des brevets

(11) **EP 1 440 865 B1**

(12) **EUROPEAN PATENT SPECIFICATION**

(45) Date of publication and mention
of the grant of the patent:
**07.06.2006 Bulletin 2006/23**

(51) Int Cl.:
***B62D 1/28*** *(2006.01)*

(21) Application number: **04000892.2**

(22) Date of filing: **16.01.2004**

(54) **Vehicle steering apparatus**

Fahrzeuglenkung

Direction de véhicule

(84) Designated Contracting States:
**DE GB**

(30) Priority: **23.01.2003 JP 2003015078**

(43) Date of publication of application:
**28.07.2004 Bulletin 2004/31**

(73) Proprietor: **HONDA MOTOR CO., Ltd.**
**Tokyo (JP)**

(72) Inventors:
  • **Tajima, Takamitsu**
   **Wako-shi**
   **Saitama (JP)**

  • **Oyama, Yasuharu**
   **Wako-shi**
   **Saitama (JP)**
  • **Sano, Shoichi**
   **Tokyo (JP)**

(74) Representative: **Herzog, Markus et al**
**Weickmann & Weickmann**
**Patentanwälte**
**Postfach 86 08 20**
**81635 München (DE)**

(56) References cited:
**US-A1- 2002 038 171    US-A1- 2002 165 646**
**US-B1- 6 314 348**

**Description**

The present invention relates to a steer-by-wire steering apparatus which is constructed to control an angle of travel direction of a motor vehicle in accordance with an angle of travel direction designated by a human operator via a steering operator member, such as a steering wheel, of the vehicle.

In JP-B-6-86222 (hereinbelow "Patent Document 1"), a steering apparatus is disclosed which is constructed to control an angle of travel direction of a motor vehicle in accordance with a steering angle of a steering operator member, such as a steering wheel, of the vehicle, i.e. an angle of travel direction designated by a human operator or driver via the steering operator member. Further, in JP-A-6-92250 (hereinbelow "Patent Document 2"), a steering apparatus is disclosed which is constructed to control a travel direction of a motor vehicle in response to vehicle driver's operation of a steering wheel with increased stability and increased followability with respect to the steering wheel operation.

Specifically, the steering apparatus disclosed in Patent Document 1, provided with a power steering mechanism for changing an orientation or steering angle of steerable road wheels of the motor vehicle via an actuator, includes a direction designation section for, in response to operation by the human operator or driver, designating an angle of travel direction of the vehicle relative to a predetermined reference absolute azimuth, and a travel direction detection section for detecting an actual angle of travel direction of the vehicle relative to the predetermined reference absolute azimuth. The disclosed steering apparatus also includes a control section for controlling the power steering mechanism so as to eliminate a deviation or offset between the designated angle travel direction and the detected actual angle of travel direction on the basis of output signals from the steering direction designation section and travel direction detection section.

The steering apparatus disclosed in Patent Document 2 includes a steering direction designation section for designating a travel-direction variation amount of the motor vehicle relative to a predetermined reference direction, a travel direction detection section for detecting an actual travel-direction variation amount of the vehicle, and a control section for controlling a power steering mechanism so as to eliminate an offset between the designated travel-direction variation amount and the detected actual travel-direction variation amount (i.e., angle-of-travel-direction offset) . Here, the control section includes a road-wheel-steering-angle designation section for outputting a signal indicative of a target road-wheel steering angle on the basis of the angle-of-travel-direction offset, and the road-wheel-steering-angle designation section is constructed to reduce the road-wheel steering angle as a traveling velocity of the motor vehicle increases.

According to each of the prior art techniques disclosed in Patent Document 1 and Patent Document 2, the steering mechanism is controlled so as to eliminate the offset between the angle of travel direction designated by the driver and the detected actual angle of travel direction relative to the predetermined reference azimuth.

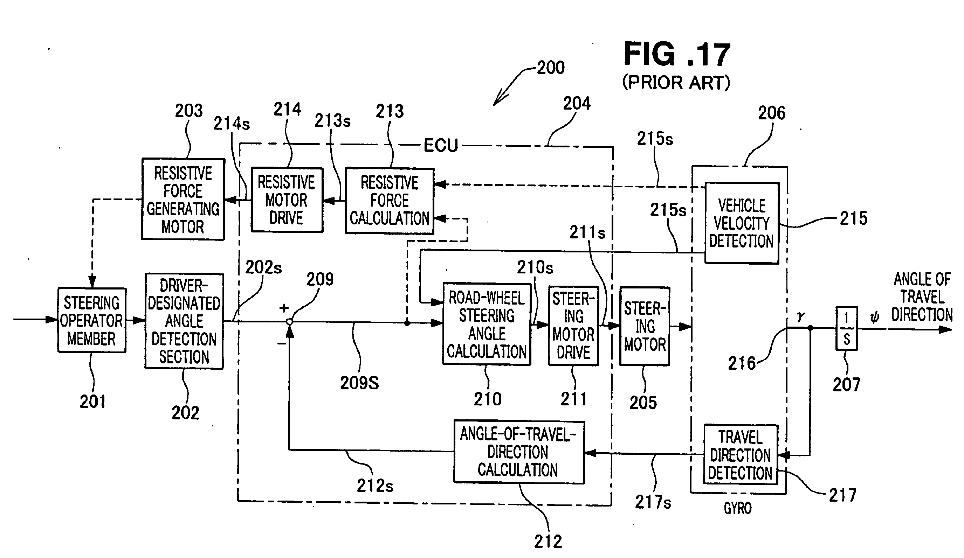

Fig. 17 is a block diagram showing a general hardware setup of the control device in the steering apparatus disclosed in Patent Document 1 and Patent Document 2. The control device 200 includes an angle-of-travel-direction input section (i.e., steering operator member) 201, a designated angle detection section 202, a resistive force generating motor 203, an electronic control unit (ECU) 204, a steering motor 205, and integrator 207. The electronic control unit 204 includes an offset calculation section 209, a road-wheel steering angle calculation section 210, a steering motor drive section 211, an angle-of-travel-direction calculation section 212, a steering resistive force calculation section 213, and a resistive motor drive section 214. The motor vehicle 206 includes steerable road wheels, a vehicle velocity detection section 215, a yaw rate detection section 216, a travel direction detection section 217, etc.

The angle-of-travel-direction input section 201 comprises a steering operator member, such as the steering wheel, of the vehicle, which is operable by the vehicle driver to input a target angle of travel direction. In the case where the steering operator member 201 is the steering wheel, an angle through which the driver has turned the steering wheel is input or designated as the target angle of travel direction. The designated angle detection section 202 detects the target angle of travel direction input or designated by the driver through the steering operator member 201 and thereby outputs a signal 202s indicative of a driver-designated steering angle $\theta$ (i.e., steering angle of the steering operator member 201) to the offset calculation section 209 of the electronic control unit 204. The resistive force generating motor 203 is controlled by the electronic control unit 204 to give a steering resistive force to the steering operator member 201.

The electronic control unit 204 generates a drive signal 211s for driving the steering motor 205 on the basis of the signal 202s indicative of the driver-designated steering angle $\theta$ detected via the designated angle detection section 202, signal 215s indicative of a vehicle velocity V detected by the vehicle velocity detection section 215 and signal 217s indicative of a travel direction (yaw angle) $\phi$ of the vehicle 296 detected by the travel direction detection section 217, and it drives the steering motor 205 in accordance with the drive signal 211s. Also, on the basis of the signal 202s indicative of the driver-designated steering angle $\theta$, signal 215s indicative of the vehicle velocity V and signal 217s indicative of the travel direction (yaw angle) $\phi$ detected by the travel direction detection section 217, the electronic control unit 204 generates a drive signal 214s for driving the resistive force generating motor 203.

In response to the target angle of travel direction input by the vehicle driver via the steering operator member 201, the control device 200 activates the steering motor 205 to impart a target road-wheel steering angle to the steerable wheels of the vehicle 206, so that the travel direction of the vehicle 206 is varied and thus a yaw rate γ corresponding to the travel direction variation is produced. Then, the angle of travel direction of the vehicle 206 is controlled in accordance with a value obtained by the integrator 207 integrating the yaw rate of the vehicle 206.

The angle-of-travel-direction calculation section 212 generates a signal 212s indicative of a current angle of travel direction φ of the motor vehicle 206 obtained on the basis of the signal 217s indicative of the integrated value of the yaw rate γ.

The offset calculation section 209 calculates an offset E between the signal 202s indicative of the target angle of travel direction θ output from the driver-designated angle detection section 202 and the signal 212s indicative of the current angle of travel direction φ output from the angle-of-travel-direction calculation section 212, to thereby supply a signal 209s indicative of the calculated offset E (E = θ - φ) to the road-wheel steering angle calculation section 210 and resistive force calculation section 213.

The road-wheel steering angle calculation section 210 generates a signal 210s indicative of a target road-wheel steering angle δ, on the basis of the signal 209s indicative of the calculated offset E and the signal 215s indicative of the detected vehicle velocity V. This road-wheel steering angle calculation section 210 includes a conversion table, for example in the form of a ROM, prestoring various target road-wheel steering angles δ preset in association with various possible angle offsets E and vehicle velocities V. Alternatively, the road-wheel steering angle calculation section 210 may be arranged to calculate a target road-wheel steering angle δ on the basis of a pre-registered function expression or in any other suitable manner.

On the basis of the target road-wheel steering angle signal 210s output from the road-wheel steering angle calculation section 210, the steering motor drive section 211 generates a drive signal 211s for driving the steering motor 205. The steering motor 205 includes a gear mechanism etc. In a case where the steering motor 205 comprises a DC motor and the steering angle of the motor vehicle is controlled on the basis of a polarity and intensity value of a motor current to be supplied to the DC motor 205, the steering motor drive section 211 supplies the motor 205 with a predetermined motor current of a predetermined polarity corresponding to a target road-wheel steering value δ. Where the steeringmotor 205 comprises a pulse motor, the steering motor drive section 211 is constructed to supply a necessarynumber of pulses for forward or reverse rotation of the pulse motor 205.

The steering resistive force calculation section 213 generates a signal 213s indicative of a target resistive torque value T, on the basis of the signal 209s indicative of the angle offset E and signal 215s of the vehicle velocity V. For this purpose, the steering resistive force calculation section 213 includes a conversion table, for example in the form of a ROM, prestoring various target resistive torque values T preset in association with various possible angle offsets E and vehicle velocities V. Alternatively, the steering resistive force calculation section 213 may be arranged to calculate a target resistive torque value T on the basis of a pre-registered function expression or in any other suitable manner.

The resistive motor drive section 214 generates a drive signal 214s for driving the resistive force generating motor 203, on the basis of the signal 213s indicative of the target resistive torque value T output from the steering resistive force calculation section 213.

Generally, coordinates (X, Y) of a trajectory represented by the center of gravity of a motor vehicle can be determined by the following mathematical expressions, if an initial position is represented by "$(X_0, Y_0)$", yaw angle by "φ", yaw angle rate (i.e., yaw rate) by "γ", vehicle velocity by "V", vehicle body slip angle by "β" and initial yaw angle by "$φ_0$" and assuming that the yaw angle φ is derived by "$φ_0 + \int γ \, dt$":

$$X = X_0 + V \cdot \int \cos(\beta + \phi)\,dt \qquad \text{Mathematical Expression (1)}$$

$$Y = Y_0 + V \cdot \int \sin(\beta + \phi)\,dt \qquad \text{Mathematical Expression (2)}$$

According to the conventionally-known control scheme, a yaw angle rate is detected via a yaw rate gyro, the detected yaw angle rate is integrated to determine a yaw angle (i.e., angle of travel direction of the vehicle) φ, and the thus-determined yaw angle (angle of travel direction of the vehicle) φ is multiplied by a preset gain coefficient so as to perform control for eliminating an offset between the driver-designated angle of travel direction and the actual angle of travel direction of the vehicle φ and thereby facilitate steering of the vehicle. However, because the gain coefficient is preset as a function of the detected vehicle velocity, a function of detected operating states of the motor vehicle, such as any of a vehicle velocity, lateral acceleration, yaw rate and vehicle body slip angle β, or as a composite function of these detected operating states, there could occur a control error due to variation in a driving environment (e.g., variation in responsiveness of the motor vehicle).

In order to more accurately control the angle of travel direction of the motor vehicle, there is a need to take account of the vehicle body slip angle β too as illustrated in Mathematical Expression (1) and Mathematical Expression (2) above.

For the foregoing reasons, there has been a demand for a section which permits enhanced control accuracy of the actual angle of travel direction of the motor vehicle relative to the driver-designated angle of travel direction.

In such motor vehicles, it may be possible to control the road-wheel steering angle using a vehicle's absolute position detected via a communication navigation system. However, in case signal transmission from a communication satellite is lost, or in case accurate acquisition of vehicle direction information is prevented, there could occur significant problems, e.g. loss of steering angle control of the vehicle, great deviation of the actual angle of travel direction of the vehicle from the driver-designated angle of travel direction and deviation of the vehicle from a road, which would require correcting steering operation by the vehicle driver, thereby resulting in increased burdens on the vehicle driver.

In view of the foregoing prior art problems, it is an object of the present invention to provide an improved steering apparatus which can control an angle of travel direction of the vehicle with increased accuracy to constantly orient the vehicle in a safe direction.

In order to accomplish the above-mentioned obj ect, the present invention provides a steer-by-wire steering apparatus for a vehicle including a communication navigation system capable of obtaining an absolute position of the vehicle, which comprises: a steering operator member operatively connected to a steerable road wheel via an electric wire; a drive section for steering the steerable roadwheel, in response to operation of the steering operator member, via the electric wire; a detection section for detecting a steering angle of the steering operator member and an angle of travel direction of the vehicle; an angle-of-travel-direction calculation section for calculating an angle of travel direction of the vehicle on the basis of the absolute position of the vehicle obtained via the communication navigation system; and a control section for controlling the drive section such that the angle of travel direction calculated by the angle-of-travel-direction calculation section agrees with the steering angle of the steering operator member.

When there is a deviation between an angle of travel direction controlled to eliminate the offset between the angle of travel direction designated via the steering operator member and the detected actual angle of direction of the vehicle, the control section performs further control to eliminate the deviation in accordance with the angle of travel direction calculated by the angle-of-travel-direction calculation section. As a consequence, the present invention can control the actual angle of direction of the vehicle to be closer to, or substantially equal to, the designated angle of travel direction.

In an embodiment of the present invention, the steer-by-wire steering apparatus further comprises a second angle-of-travel-direction calculation section for calculating an angle of travel direction of the vehicle on the basis of an output of the detection section without using the absolute position of the vehicle obtained via the communication navigation system. Thus, when the communication navigation system is out of order, the control section can control the drive section on the basis of the angle of travel direction calculated by the second angle-of-travel-direction calculation section. Namely, even when communication from a satellite is lost or accurate information of a travel direction of the motor vehicle can not be obtained due to a failure of the navigation system, the control based on the second angle-of-travel-direction calculation section can reliably prevent loss of steering angle control of the vehicle, great deviation of the actual angle of travel direction of the vehicle from the designated angle of travel direction and/or deviation of the vehicle from a road, thereby eliminating the need for correcting steering operation and reducing burdens on the vehicle driver.

Certain preferred embodiments of the present invention will hereinafter be described in detail, by way of example only, with reference to the accompanying drawings, in which:

Fig. 1 is a schematic overall view of a motor vehicle employing a steering apparatus in accordance with a first embodiment of the present invention;
Fig. 2 is a block diagram showing a general hardware setup of a control device in the first embodiment of the steering apparatus;
Fig. 3 is a block diagram showing a specific example of an absolute angle-of-travel-direction calculation section in the first embodiment;
Fig. 4 is a flow chart showing an example step sequence of an absolute-angle-of-travel-direction calculating process performed in the first embodiment;
Fig. 5 is a view explanatory of operation of the first embodiment of the steering apparatus when the motor vehicle goes around a curve;
Fig. 6 is a block diagram showing a general hardware setup of a steering apparatus in accordance with a second embodiment of the present invention;
Fig. 7 is a diagram showing a specific example of a future position estimation/safety level estimation section in the second embodiment;
Fig. 8 is a flow chart showing an example step sequence of a future position/safety level estimating process performed in the second embodiment;
Fig. 9 is a block diagram showing a general hardware setup of a steering apparatus in accordance with a third embodiment of the present invention;

Fig. 10 is a block diagram showing a general hardware setup of a steering apparatus in accordance with a fourth embodiment of the present invention;

Fig. 11 is a diagram showing a specific example of a navigation system failure detection/travel direction value selection section in the fourth embodiment;

Fig. 12 is a flow chart showing an example step sequence of a navigation system failure detecting/travel direction value selecting process;

Fig. 13 is a flow chart showing control performed in the fourth embodiment of the steering apparatus;

Fig. 14 is a block diagram showing a general hardware setup of a steering apparatus in accordance with a fifth embodiment of the present invention;

Fig. 15 is a diagram showing a specific example of a navigation system failure detection/travel direction value selection section in the fifth embodiment;

Fig. 16 is a flow chart showing an example step sequence of a navigation system failure detecting/travel direction value selecting process; and

Fig. 17 is a block diagram showing a general hardware setup of a control device in conventionally-known steering apparatus.

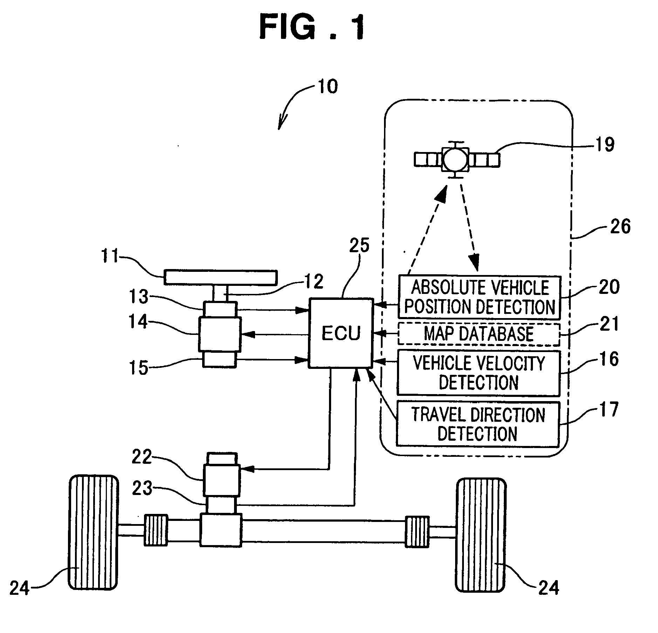

Initial reference is made to Fig. 1 schematically illustrating a steering apparatus in accordance with a first embodiment of the present invention. The steering apparatus 10 of the invention includes a steering operator member 11, typically in the form of a steering wheel, which provides an angle-of-travel-direction input section of the steering apparatus, a steering shaft 12 connected to the steering operator member 11, and a designated angle detection section 13, resistive force generating motor 14 and torque sensor 15 provided on the steering shaft 12. The steering apparatus 10 also includes a vehicle velocity detection section 16, a travel direction detection section 17, a vehicle-operating-state detection section 18, an external absolute-vehicle-position detection section 19, an absolute vehicle position detection section 20, and a map database 21. The steering apparatus 10 also includes a road-wheel steering angle generating motor (hereinafter "steering motor") 22, an actual road-wheel-steering-angle detection section 23, steerable road wheels 24, and an electronic control unit (ECU) 25. The steering shaft 12 is rotatably supported, for example, on the body (not shown) of the motor vehicle.

The steering operator member 11 is operable by a human operator or driver of the motor vehicle 27 to input a target angle of travel direction of the vehicle. In the case where the steering operator member 11 is the steering wheel, the vehicle driver turns the steering wheel so that an angle through which the steering wheel has been turned (i.e., steered angle of the steering wheel) is input as the target angle of travel direction.

The designated angle detection section 13 detects the target angle of travel direction input by the driver and thereby outputs a driver-designated steering angle θ (i.e., steering angle of the steering operator member or steering wheel) to the electronic control unit (ECU) 25. Specifically, the designated angle detection section 13 detects turning of the steering shaft 12 using, for example, a rotary encoder, and supplies the ECU 25 with a signal 13s indicative of the target angle of travel direction (i.e., driver-designated steering angle θ) input by the vehicle driver via the steering operator member 11. Note that the designated angle of travel direction θ represents an azimuth angle measured from a predetermined reference position, such as the north or current traveling direction of the vehicle.

The resistive force generating motor 14 is controlled by the electronic control unit (ECU) 25 to impart a steering resistive force to the steering operator member 11. Specifically, the resistive force generating motor 14, which includes a gear mechanism etc. (not shown), gives a steering resistive force corresponding to intensity of a motor current supplied from the ECU 25.

The torque sensor 15 detects steering torque applied via the steering operator member 11 and outputs a signal indicative of the detected steering torque to the ECU 25.

The vehicle velocity detection section 16 detects a velocity V of the motor vehicle 27 and supplies a signal 16s indicative of the detected vehicle velocity V to the ECU 25. The travel direction detection section 17, which preferably comprises a yaw rate gyro etc., outputs a signal 17s indicative of a value obtained by integrating a yaw rate γ and supplies the signal 17s to the ECU 25.

The absolute vehicle position detection section 20, which comprises a communication navigation device, includes a vehicle-mounted receiver for receiving electromagnetic waves from four or more GPS satellites and detects a current position of the motor vehicle 27 by calculating respective positions of the satellites and a distance from the satellites to the vehicle on the basis of orbit factors etc.

The external absolute-vehicle-position detection section 19 comprises the four or more GPS satellites, each of which emits electromagnetic waves of, for example, 1.6 GHz, to transmit various information, such as time values, orbit elements, etc. of the satellite. Map database 21 comprises a storage device (not shown) containing map information. The absolute vehicle position detection section 20, external absolute-vehicle-position detection section 19 and map database 21 together constitute a communication navigation system 26.

The steering motor 22 steers the steerable road wheels 24 on the basis of a steering drive signal 22s supplied from the ECU 25.

The actual road-wheel-steering-angle detection section 23 detects an angle through which the steerable road wheels 24 have been actually steered (i.e., actual steered angle of the road wheels 24) and supplies a signal indicative of the detected actual steered angle of the road wheels 24 to the ECU 25.

On the basis of the signal 13s indicative of the target angle of travel direction (i.e., driver-designated steering angle θ), signal 20s indicative of a vehicle's absolute position detected via the absolute vehicle position detection section 20, signal 17s indicative of the value obtained by integrating the yaw rate γ and signal 16s indicative of the vehicle velocity V, the ECU 25 controls the polarity and intensity value of a motor current to thereby impart a steering resistive force to the steering operator member (steering wheel) 11, and it also controls an angle of travel direction φ of the vehicle 27 in response to the driver-designated steering angle θ.

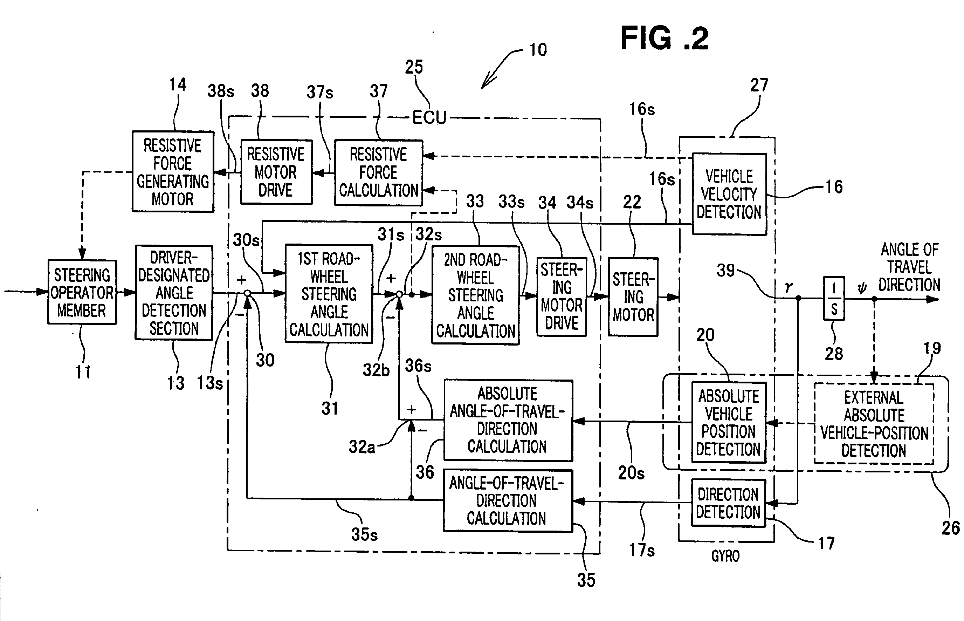

Fig. 2 is a block diagram showing a general hardware setup of a control device employed in the first embodiment of the steering apparatus. The steering apparatus 10 includes the angle-of-travel-direction input section (i.e., steering operator member) 11, designated angle detection section 13, resistive force generating motor 14 and electronic control unit (ECU) 25. The steering apparatus 10 also includes the steering motor 22, integrator 28 and external absolute-vehicle-position detection section 19. The electronic control unit 25 includes an offset calculation section 30, a first road-wheel steering angle calculation section 31, other offset calculation sections 32a and 32b, a second road-wheel steering angle calculation section 33, a steering motor drive section 34, and an angle-of-travel-direction calculation section 35. The electronic control unit 25 also includes an absolute angle-of-travel-direction calculation section 36, a steering resistive force calculation section 37, and a resistive motor drive section 38. The vehicle velocity detection section 16, vehicle travel direction detection section 17, yaw rate detection section 39 and absolute vehicle position detection section 20 are provided on the body of the motor vehicle 27.

The steering operator member 11, such as the steering wheel, of the vehicle, is operable by the vehicle driver to input a target angle of travel direction. In the case where the steering operator member 11 is the steering wheel, an angle through which the driver has turned the steering wheel is input or designated as the target angle of travel direction. The designated angle detection section 13 detects the target angle of travel direction input or designated by the driver through the steering operator member 11 and thereby outputs a driver-designated steering angle θ to the offset calculation section 30 of the electronic control unit 25. The resistive force generating motor 14 is controlled by the electronic control unit 25 to impart a steering resistive force to the steering operator member 11.

The electronic control unit 25 generates a drive signal 34s for driving the steering motor 22 on the basis of the signal 13s indicative of the driver-designated steering angle θ detected via the detection section 13, signal 16s indicative of the vehicle velocity V detected by the vehicle velocity detection section 16, signal 17s indicative of the travel direction (yaw angle) detected by the travel direction detection section 17 and signal 20s indicative of the vehicle's absolute position detected via the absolute vehicle position detection section 20. Also, on the basis of the signal 13s indicative of the driver-designated steering angle θ, signal 16s indicative of the vehicle velocity V, signal 17s indicative of the travel direction (yaw angle), the electronic control unit 25 generates a drive signal 38s for driving the resistive force generating motor 14.

Once the vehicle driver inputs a target angle of travel direction of the vehicle via the steering operator member 11, the steering apparatus 10 activates the steering motor 22 to impart a target road-wheel steering angle to the steerable wheels 24 of the vehicle 27, so that the travel direction of the vehicle 27 is varied and thus a yaw rate and lateral acceleration corresponding to the travel direction variation are produced. Then, the angle of travel direction of the vehicle 27 is controlled in accordance with a value obtained by the integrator 28 integrating the travel direction variation.

The angle-of-travel-direction calculation section 35 generates a signal 35s indicative of a current angle of travel direction φ of the vehicle 27 determined on the basis of the signal 17s indicative of the value obtained by integrating the yaw rate γ output from the travel direction detection section 17.

The offset calculation section 30 calculates an angle offset E between the signal 13s indicative of the target value θ of the angle of travel direction output from the driver-designated angle detection section 13 and the signal 35s indicative of the current angle of travel direction φ output from the angle-of-travel-direction calculation section 35, to thereby supply a signal indicative of the calculated offset E (E = θ - φ) to the first road-wheel steering angle calculation section 31.

The first road-wheel steering angle calculation section 31 generates a signal 31s indicative of a target road-wheel steering angle δ, on the basis of the signal 30s indicative of the calculated offset E and the signal 16s indicative of the detected vehicle velocity V. For this purpose, the first road-wheel steering angle calculation section 31 includes a conversion table, for example in the form of a ROM, prestoring various target road-wheel steering angles δ preset in association with various possible offsets E and vehicle velocities V. Alternatively, the first road-wheel steering angle calculation section 31 may be arranged to calculate a target road-wheel steering angle δ on the basis of a pre-registered function expression or in any other suitable manner.

As will be later detailed, the absolute angle-of-travel-direction calculation section 36 calculates an absolute angle of travel direction of the motor vehicle 27 on the basis of the absolute position of the vehicle 27 output from the absolute vehicle position detection section 20, and it outputs the thus-calculated absolute angle of travel direction to the offset calculation section 32a.

The offset calculation section 32a calculates an offset between a signal 36s indicative of the absolute angle of travel direction $\phi'$ output from the absolute angle-of-travel-direction calculation section 36 and the signal 35s indicative of the current angle of travel direction $\phi$ output from the angle-of-travel-direction calculation section 35.

The offset calculation section 32b calculates an offset between the target road-wheel steering angle $\delta$ output from the first road-wheel steering angle calculation section 31 and the offset $(\phi' - \phi)$ output from the offset calculation section 32a, and it outputs the calculated offset E' to the second road-wheel steering angle calculation section 33 and steering resistive force calculation section 37.

The second road-wheel steering angle calculation section 33 generates a signal 33s indicative of the road-wheel steering angle $\delta'$ on the basis of a signal 32s indicative of the offset E' . For this purpose, the second road-wheel steering angle calculation section 32 includes a conversion table, for example in the form of a ROM, prestoring various road-wheel steering angles $\delta'$ preset in association with various offsets E' ($E' = \delta - (\phi - \phi')$). Alternatively, the second road-wheel steering angle calculation section 33 may be arranged to calculate a road-wheel steering angle $\delta'$ on the basis of a pre-registered function expression or in any other suitable manner.

The steering motor drive section 34 is constructed to generate a drive signal 34a for driving the steering motor 22 on the basis of the signal 33s indicative of the road-wheel steering angle $\delta'$ output from the second road-wheel steering angle calculation section 33. The steering motor 22 includes a gear mechanism etc. In the case where the steering motor 22 comprises a DC motor and the steering angle of the motor vehicle 27 is controlled on the basis of the polarity and intensity value of the motor current to be supplied to the DC motor 22, the steering motor drive section 34 supplies the motor 22 with a predetermined motor current of a predetermined polarity corresponding to the target road-wheel steering angle value $\delta'$. Where the steering motor 22 comprises a pulse motor, the steering motor drive section 34 is constructed to supply a necessarynumber of pulses for forwardor reverse rotation of the pulse motor 22.

The steering resistive force calculation section 37 generates a signal 37s indicative of a target resistive torque value T, on the basis of the signal 32s indicative of the road-wheel steering angle $\delta'$ and signal 16s indicative of the vehicle velocity V. For this purpose, this steering resistive force calculation section 37 includes a conversion table, for example in the form of a ROM, prestoring various target resistive torque values T preset in association with various possible road-wheel steering angles $\delta'$ and vehicle velocities V. Alternatively, the steering resistive force calculation section 37 may be arranged to calculate a target resistive torque value T on the basis of a pre-registered function expression or in any other suitable manner.

The resistive motor drive section 38 generates a drive signal 38s for driving the resistive force generating motor 14 on the basis of the target resistive torque value T output from the steering resistive force calculation section 37, so that the resistive force generating motor 14 is driven in accordance with the drive signal 38s.

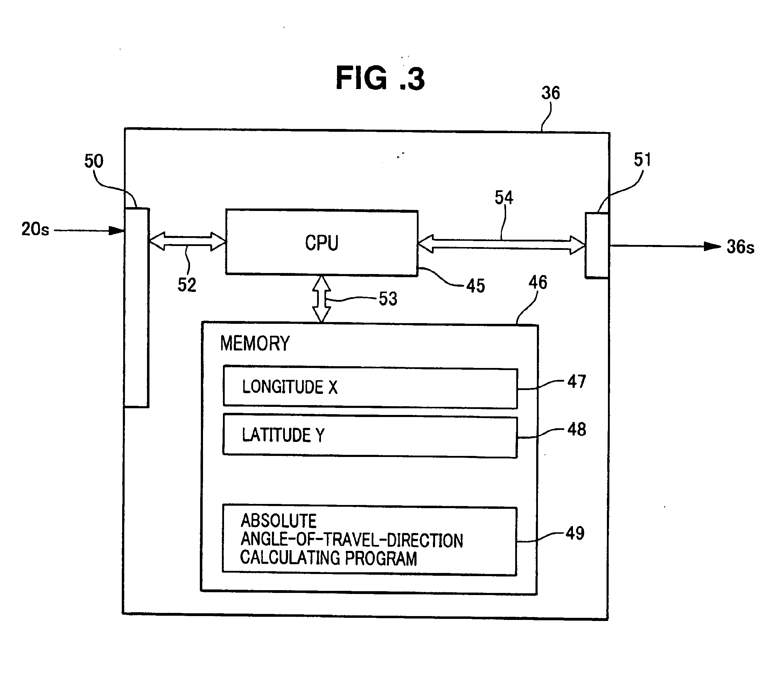

Fig. 3 is a diagram showing a specific example of the absolute angle-of-travel-direction calculation section 36, which includes a CPU 45 and a memory 46. The memory 46 includes a longitude (X) storage area 47, a latitude (Y) storage area 48, and an angle calculating program storage area 49.

In the absolute angle-of-travel-direction calculation section 36, an input interface section 50, output interface section 51, CPU 45 and memory 46 are connected via buses 52, 53 and 54. The input interface section 50 receives the absolute position (longitude X and latitude Y) of the vehicle 27 output from the absolute vehicle position detection section 20, and the output interface section 51 outputs the signal 36s indicative of the absolute angle of travel direction of the vehicle 27.

The longitude (X) storage area 47 is provided for storing the longitude X of the last-detected absolute vehicle position indicated by the signal 20s, while the latitude (Y) storage area 48 is provided for storing the latitude Y of the last-detected absolute vehicle position. The angle calculating program storage area 49 is an area containing a program for performing an absolute-angle-of-travel-direction calculating process.

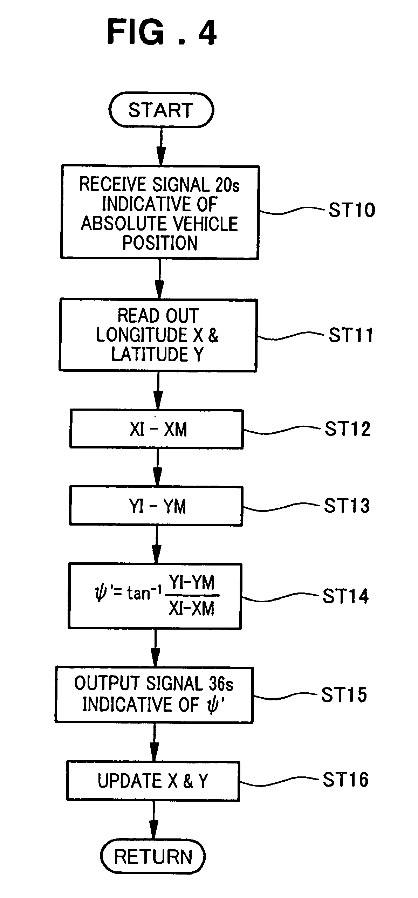

Fig. 4 is a flow chart showing an example step sequence of the absolute-angle-of-travel-direction calculating process performed in accordance with the program stored in the angle calculating program storage area 49.

First, a signal 20s indicative of a vehicle' s absolute position is input to the absolute angle-of-travel-direction calculation section 36 via the input interface section 50, at step ST10. Then, the CPU 45 reads out a longitude X stored in the longitude storage area 47 and a latitude Y stored in the latitude storage area 48, at step ST11. The CPU 45 calculates a difference between the input longitude XI and the read-out longitude XM (XI - XM) at next step ST12, and similarly calculates a difference between the input latitude YI and the read-out latitude YM (YI - YM) at step ST13. Then, at step ST14, the CPU 45 calculates an absolute angle of travel direction $\phi'$ on the basis of the differences (XI - XM) and (YI - YM) (i.e., $\phi' = \tan^{-1}$ (YI-YM/ (XI-XM) ) . Then, at step ST15, the CPU 45 outputs, via the output interface 51, a signal 36s indicative of the absolute angle of travel direction $\phi'$. The input longitude XI and input latitude YI are then stored in the longitude storage area 47 and latitude storage area 48, respectively, to update the stored longitude and latitude of the storage areas 47 and 48, at steps ST15 and ST16. The above operations are repeated at predetermined time intervals as long as an ignition switch (not shown) of the motor vehicle 27 is ON. Once the ignition switch is turned off, the current longitude XM and latitude YM are retained in the longitude storage area 47 and latitude storage area 48, respectively.

The absolute angle of travel direction φ' can be calculated accurately through the above operations, and the signal 36s indicative of the thus-calculated absolute angle of travel direction φ' is supplied to the offset calculation section 32a.

The offset calculation section 32a calculates a difference between the absolute angle of travel direction φ' calculated by the absolute angle-of-travel-direction calculation section 36 and the angle of travel direction φ calculated by the angle-of-travel-direction calculation section 35, and it outputs the calculated difference to the offset calculation section 32b. In this way, the instant embodiment of the steering apparatus can perform extremely accurate steering control.

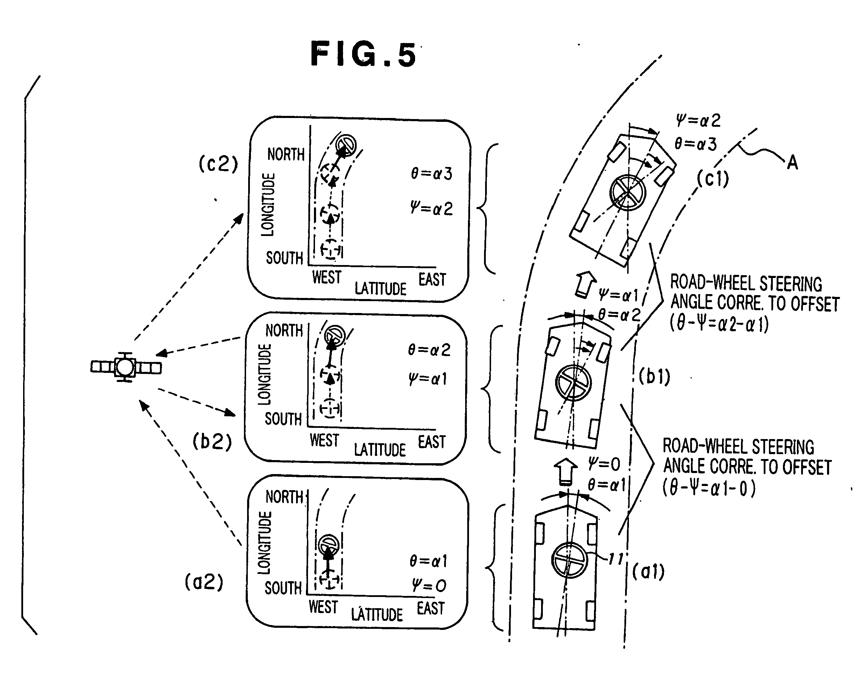

With reference to Fig. 5, the following paragraphs describe operation of the first embodiment of the steering apparatus when the motor vehicle 270 goes around a curve, assuming that the steering operator member 11 is a steering wheel.

When the motor vehicle 27 has come near a curve A in a road as shown in Fig. 5, the vehicle driver turns the steering wheel 11 to designate an angle of travel direction θ as illustrated in (a1) of Fig. 5. Let it be assumed here that the angle of travel direction φ of the vehicle immediately before the driver's turning of the steering wheel 11 is zero and the designated angle of travel direction θ is "α1". As illustrated in (a2) of Fig. 5, the absolute angle-of-travel-direction calculation section 36 calculates a current angle of travel direction φ' of the vehicle on the basis of a longitude and latitude detected by the absolute vehicle position detection section 20 and in accordance with the step sequence of Fig. 4. Then, control is performed on the basis of the calculated current angle of travel direction φ' and an offset E between the driver-designated angle of travel direction θ and the angle of travel direction φ output from the angle-of-travel-direction calculation section 35 (E = θ - φ), to generate a road-wheel steering angle corresponding to the offset (θ - φ = α1 - 0) . As a consequence, the angle of travel direction φ of the vehicle assumes the value α1 as illustrated in (b1) of Fig. 5. When the vehicle is traveling along the curve A, the vehicle driver sets the angle of travel direction θ to "α2", in response to which the angle of travel direction φ' is calculated as "α2" (φ' = α2) as illustrated in (b2) of Fig. 5. At this point too, a road-wheel steering angle corresponding to the offset (θ - φ = α2 - α1) is generated in the same manner as illustrated in (a2) of Fig. 5. As a consequence, the angle of travel direction φ of the vehicle assumes the value α2 as illustrated in (c1) of Fig. 5, and a new absolute angle of travel direction φ' is calculated as illustrated in (c2) of Fig. 5 so that control is performed on the basis of the thus-calculated new absolute angle of travel direction φ'.

Namely, in response to the angle of travel direction θ designated by the vehicle driver via the steering wheel 11, a target road-wheel steering angle is calculated, on the basis of an angle of travel direction φ of the vehicle estimated (calculated) from behavior (such as a yaw rate) of the vehicle, such that an offset in the angle of travel direction can be eliminated. If the absolute angle of travel direction φ' detected by the absolute vehicle position detection section 20 and the angle of travel direction φ output from the angle-of-travel-direction calculation section 35 differ in variation amount from each other, control is performed by the second road-wheel steering angle calculation section 33 on the basis of the offset, so as to eliminate the offset between the driver-designated angle of travel direction θ and the angle of travel direction φ of the vehicle.

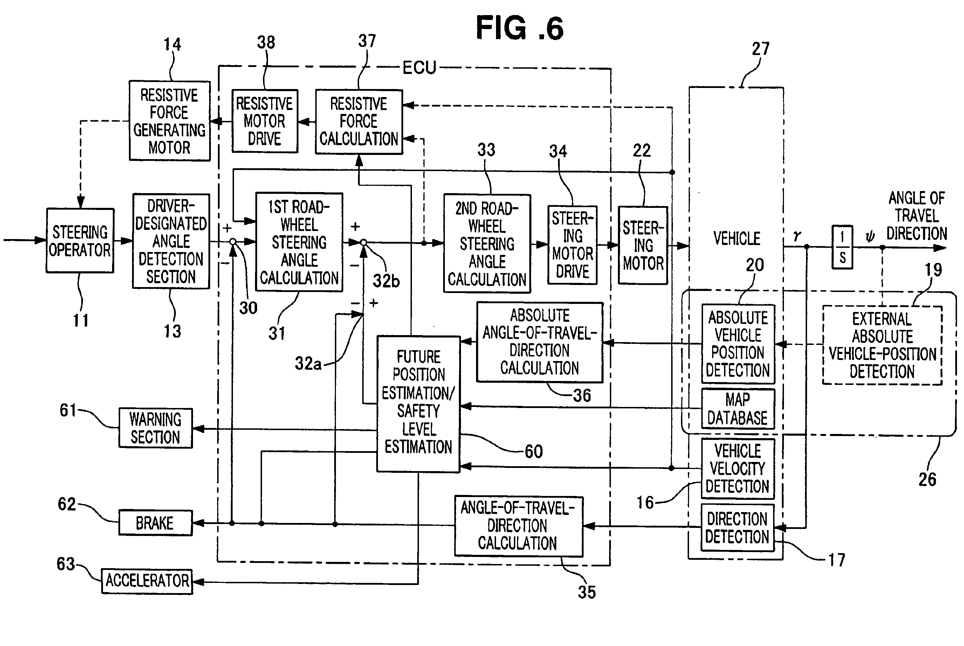

Next, a description will be given about a second embodiment of the steering apparatus, with primary reference to Fig. 6. The second embodiment of Fig. 6 is generally similar to the first embodiment of Fig. 2 but different therefrom in that it includes a future position estimation/safety level estimation section 60 and in that it generates signals to be supplied to a warning section 61, brake 62 and accelerator 63. Other elements in Fig. 6 than the future position estimation/safety level estimation section 60, warning section 61, brake 62 and accelerator 63 are represented by the same reference numerals as in Fig. 2 and will not be described to avoid unnecessary duplication.

As will be later detailed, the future position estimation/safety level estimation section 60 estimates a future position of the motor vehicle 27 on the basis of an absolute angle of travel direction φ' of the vehicle calculated by the absolute angle-of-travel-direction calculation section 36, vehicle velocity V detected by the vehicle velocity detection section 16 and map database 21, and the thus-estimated future vehicle position is compared to road shape data stored in the communication navigation system. Signal corresponding to a result of the comparison is sent to any of the warning section 61, steering resistive force calculation section 37, accelerator 63 and brake 62. Namely, if it has been determined, on the basis of the comparison, that the motor vehicle is going to depart from the road, the vehicle driver is informed of the imminent danger, for example, by a warming issued from the warning section 61, or increased or decreased steering resistive force to the steering operator member (e.g., steering wheel); in this way, the future position estimation/safety level estimation section 60 can constantly assist the vehicle driver in steering the motor vehicle in a safe direction.

If the comparison between the estimated future vehicle position and the road shape data stored in the communication navigation system has indicated that the motor vehicle is going to deviate inwardly from the road due to excessive steering of the steering wheel producing a too-great angle of travel direction), control is performed such that the travel direction of the motor vehicle is turned outwardly, by controlling the steering motor 22 to generate a reduced road-wheel steering angle via the road-wheel steering angle calculation sections and steering motor drive section and sending a control signal to the brake or accelerator to adjust the vehicle velocity on the basis of operating states of the vehicle, such as saturation of a friction circle of the tires and cornering force. If, on the other hand, the comparison between the estimated future vehicle position and the road shape data stored in the communication navigation system has indicated that the motor vehicle is going to deviate outwardly from the road due to insufficient steering of the steering wheel producing a too-small angle of travel direction in a blind corner or corner having a gradually decreasing turning radius), control is performed such that the travel direction of the motor vehicle is turned inwardly, by controlling the steering motor 22 to generate an increased road-wheel steering angle via the road-wheel steering angle calculation sections and steering motor drive section and sending a control signal to the brake or accelerator to adjust the vehicle velocity on the basis of operating states of the vehicle, such as saturation of a friction circle of the tires and cornering force.

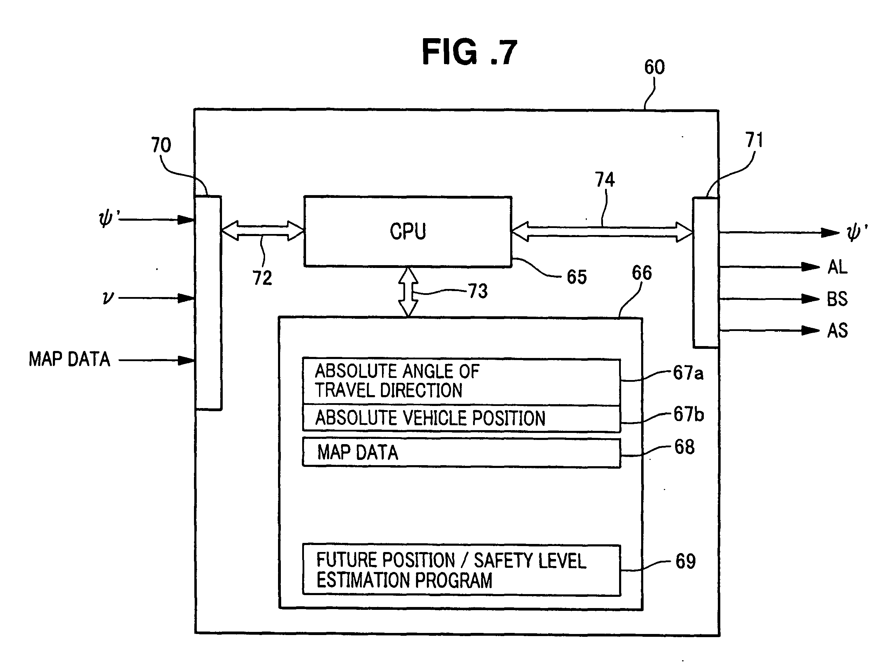

Fig. 7 is a diagram showing a specific example of the future position estimation/safety level estimation section 60, which includes a CPU 65 and a memory 66. The memory 66 includes an absolute angel-of-travel-direction storage area 67a, an absolute vehicle position storage area 67b, a map data storage area 68, and a future position/safety level estimating program storage area 69.

In the future position estimation/safety level estimation section 60, an input interface section 70, output interface section 71, CPU 65 and memory 66 are connected via buses 72, 73 and 74. The input interface section 70 receives an absolute angle of travel direction $\phi'$ output from the absolute angle-of-travel-direction calculation section 36, signal 16s indicative of the vehicle velocity V output from the vehicle velocity detection section 16 and map data read out from the map database 21. The output interface section 71 outputs a signal indicative of the absolute angle of travel direction $\phi'$, warning signal AL to be passed to the warning section 61, signal BS to be passed to the brake, signal AS to be passed to the accelerator and signal to be passed to the steering resistive force calculation section 37.

The absolute angel-of-travel-direction storage area 67a is provided for storing the input absolute angle of travel direction $\phi'$. The absolute vehicle position storage area 67b is provided for storing a last-detected absolute vehicle position (X, Y) . The map data storage area 68 is an area for storing map data of a predetermined range from the current traveling position of the motor vehicle. The future position/safety level estimating program storage area 69 is an area containing a program for performing a future position/safety level estimating process.

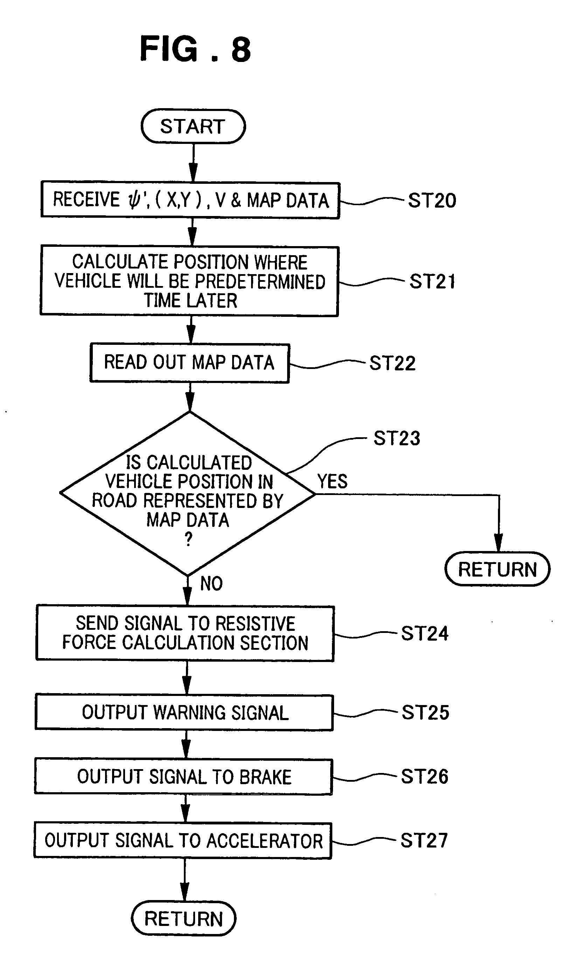

Fig. 8 is a flow chart showing an example step sequence of the future position/safety level estimating process.

First, at step ST20, an absolute angle of travel direction $\phi'$ , absolute vehicle position (X, Y), vehicle velocity V and map data are input to the future position estimation/safety level estimation section 60 via the input interface section 70. At next step ST21, the CPU 65 calculates a position at which the motor vehicle will be a predetermined time later, on the basis of the vehicle velocity V, absolute angle of travel direction $\phi'$ and current absolute vehicle position (X, Y). At step ST 22, corresponding map data are read out from the map data storage area 68 of the memory 66. Then, at step ST23, the CPU 65 determines whether or not the position of the motor vehicle calculated at step ST21 is included in a road represented by the read-out map data. If answered in the affirmative at step ST23, the CPU 65 returns. If, on the other hand, the position of the motor vehicle calculated at step ST21 is not included in the road represented by the read-out map data, then the CPU 65 sends a signal to the steering resistive force calculation section 37, at step ST24. In response to the signal, the steering resistive force calculation section 37 increases or decreases the steering resistive force. Then, the CPU 65 sends a warning signal to the warning section 61, at step ST25. Also, at steps ST26 and ST27, the CPU 65 sends brake and acceleration adjusting signals as necessary, via the output interface 71, on the basis of the future position and map data.

With the above operations, the future position estimation/safety level estimation section 60 in the second embodiment can give the vehicle driver appropriate information before the motor vehicle actually deviates from the road, and it can thereby constantly assist the vehicle driver in steering the motor vehicle in a safe direction. Also, by adjusting the braking and accelerating operations, the future position estimation/safety level estimation section 60 can contribute to accurate control of the angle of travel direction of the vehicle 27.

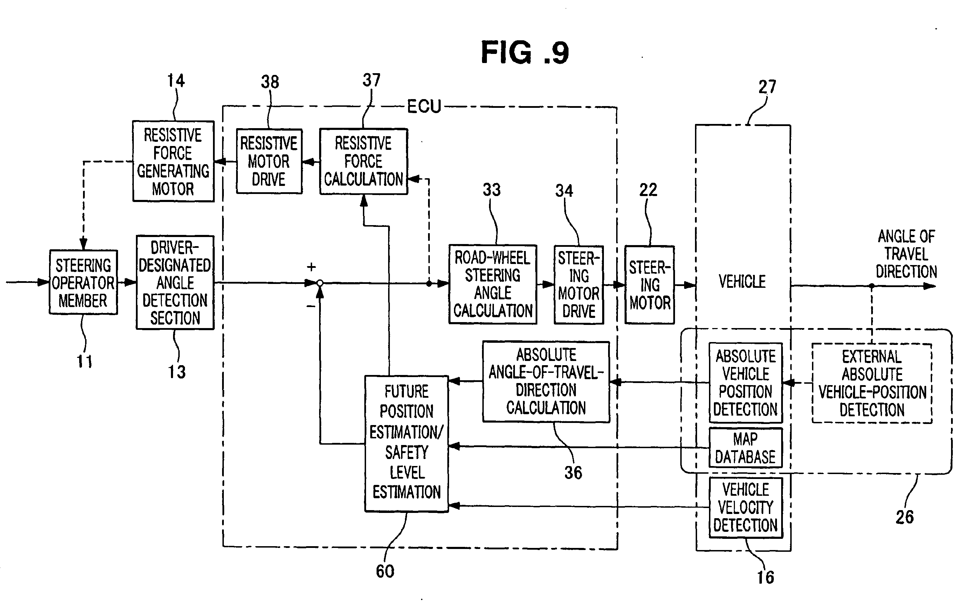

Next, a description will be given about a third embodiment of the steering apparatus, with primary reference to Fig. 9. The third embodiment of Fig. 9 is generally similar to the first embodiment of Fig. 2 but different therefrom in that the future position estimation/safety level estimation section 60 outputs signals to the offset calculation sections and steering resistive force calculation section 37. Elements in Fig. 9 represented by the same reference numerals as in Fig. 2 are similar in structure and function to the corresponding elements in Fig. 2 and will not be described to avoid unnecessary duplication.

In the third embodiment of the steering apparatus, the generally same step sequence as illustrated in Fig. 8 is followed. Namely, at step ST 20, an absolute angle of travel direction $\phi'$, absolute vehicle position (X, Y), vehicle velocity V and map data are input to the future position estimation/safety level estimation section 60 via the input interface section 70. At next step ST21, the CPU 65 calculates a position at which the motor vehicle will be a predetermined time later, on the basis of the vehicle velocity V, absolute angle of travel direction $\phi'$ and current absolute vehicle position (X, Y) . At step ST 22, corresponding map data are read out from the map data storage area 68 of the memory 66. Then, at step ST23, the CPU 65 determines whether or not the position of the motor vehicle calculated at step ST21 is included in a road represented by the read-out map data. If answered in the affirmative at step ST23, the CPU 65 returns. If, on the other hand, the position of the motor vehicle calculated at step ST21 is not included in the road represented by the read-out map data, the CPU 65 sends a signal to the steering resistive force calculation section 37 at step ST24, so that the steering resistive force calculation section 37 increases or decreases the steering resistive force.

With the above operations, the future position estimation/safety level estimation section 60 in the third embodiment can give the vehicle driver appropriate information before the motor vehicle actually deviates from the road, and it can thereby constantly assist the vehicle driver in steering the motor vehicle in a safe direction.

In the above-described first to third embodiments, the travel direction detection section 17 typically comprises a yaw rate gyro; alternatively, the travel direction detection section 17 may comprise an earth magnetism sensor or ay other suitable means.

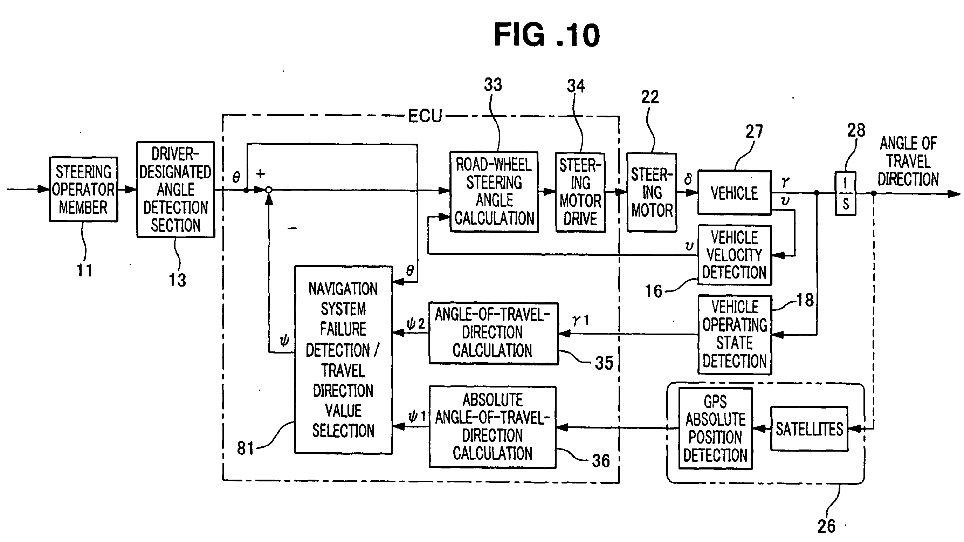

Next, a description will be given about a fourth embodiment of the steering apparatus, with primary reference to Fig. 10. The fourth embodiment of Fig. 10 is generally similar to the first embodiment of Fig. 2 but different therefrom in that it further includes a navigation system failure detection/ travel direction value selection section 81. Elements in Fig. 10 represented by the same reference numerals as in Fig. 2 are similar in structure and function to the corresponding elements in Fig. 2 and will not be described to avoid unnecessary duplication.

The navigation system failure detection/travel direction value selection section 81 is supplied with an angle of travel direction and absolute angle of travel direction. When an abnormal condition or failure of the communication navigation system has been detected by the failure detection/travel direction value selection section 81, it selects and outputs an angle of travel direction of the vehicle estimated or calculated by the angle-of-travel-direction calculation section on the basis of a yaw rate, lateral acceleration and vehicle body slip angle detected by the vehicle-operating-state detection section.

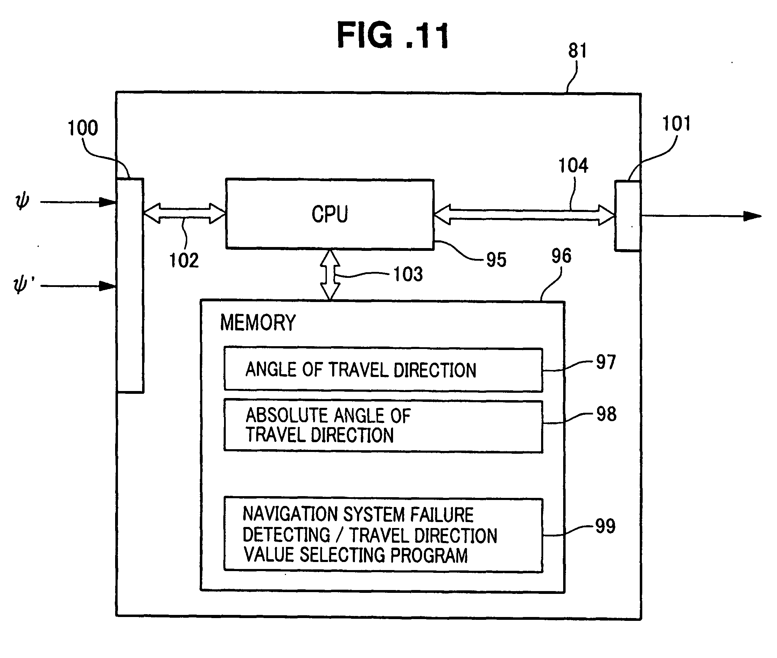

Fig. 11 is a diagram showing a specific example of the navigation system failure detection/travel direction value selection section 81 in the fourth embodiment, which includes a CPU 95 and a memory 96. The memory 96 includes an angel-of-travel-direction storage area 97, an absolute angel-of-travel-direction storage area 98, and a program storage area 99 storing a program for performing a navigation system failure detecting/travel direction value selecting process.

The input interface section 100, output interface section 51, CPU 95 and memory 96 are connected via buses 102, 103 and 104. The input interface section 100 receives the signal indicative of the angle of travel direction $\phi$ output from the angle-of-travel-direction calculation section 35 and signal indicative of the absolute angle of travel direction $\phi'$ output from the absolute angle-of-travel-direction calculation section 36, and the output interface section 101 outputs a signal indicative of a selected angle of travel direction.

The angel-of-travel-direction storage area 97 is provided for storing the angle of travel direction $\phi$ input via the input interface section 100. The absolute angel-of-travel-direction storage area 98 is provided for storing the absolute angle of travel direction $\phi'$ input via the input interface section 100.

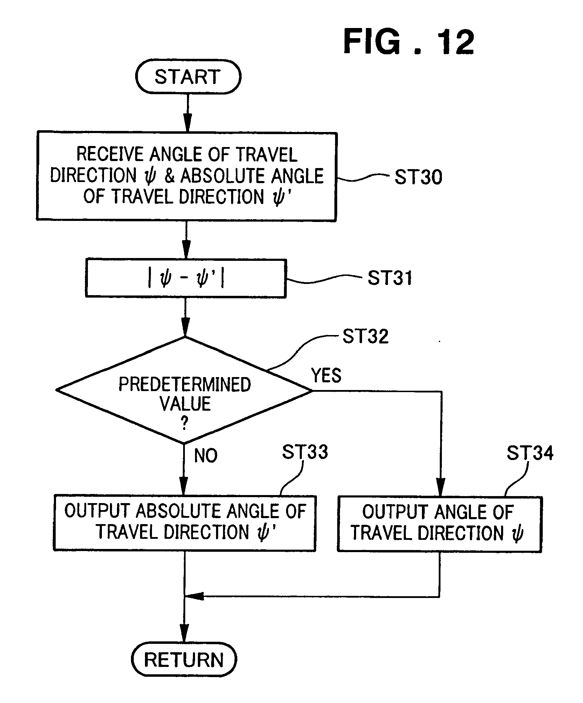

Fig. 12 is a flow chart showing an example step sequence of the navigation system failure detecting/travel direction value selecting process.

First, at step ST30, an angle of travel direction $\phi$ and absolute angle of travel direction $\phi'$ are input to the navigation system failure detection/travel direction value selection section 81 via the input interface section 100. The CPU 95 calculates an absolute value of a difference between the input angle of travel direction $\phi$ and absolute angle of travel direction $\phi'$, at step ST31. Then, at step ST32, the CPU 95 determines whether the absolute value of the difference is greater than a predetermined value. If the absolute value of the difference is not greater than the predetermined value as determined at step ST32, the absolute angle of travel direction $\phi'$ is selected and output at step ST33. If the absolute value of the difference is greater than the predetermined value, then the angle of travel direction $\phi$ is selected and output at step ST34. The above operations are repeated at predetermined time intervals as long as the ignition switch (not shown) of the motor vehicle 27 is ON.

With the above-described operations, the navigation system failure detection/travel direction value selection section 81 instantly determines whether or not the communication navigation system is out of order or suffering from a failure. If the communication navigation system is not suffering from any failure, the section 81 outputs the absolute angle of travel direction $\phi'$ to the offset calculation section, while, if the communication navigation systemis suffering from a failure, the section 81 outputs the angle of travel direction $\phi$ to the offset calculation section. Note that navigation system failure detection/travel direction value selection section 81 may detect a failure of any of the components constituting the communication navigation system.

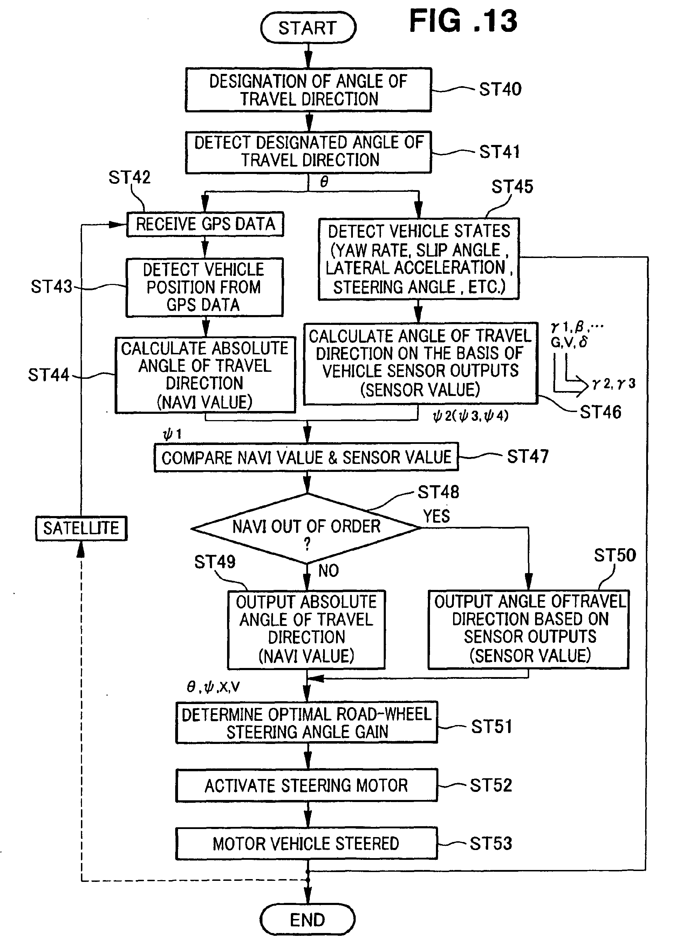

Fig. 13 is a flow chart showing a sequence of control operations performed in the fourth embodiment of the steering apparatus. Angle of travel direction of the motor vehicle 27 is designated by the vehicle driver via the steering operator member 11 at step ST40, and the driver-designated angle of travel direction θ is detected by the driver-designated angle detection section 13 at step ST41. Then, absolute position data (X, Y) of the motor vehicle 27 is received from the satellites via the absolute vehicle position detection sections 19 and 20 at steps ST42 and ST43, and the absolute angle-of-travel-direction calculation section 36 calculates a current absolute angle of travel direction ($\phi$1) of the vehicle 27 at step ST44.

In the meantime, operating states of the motor vehicle 27 are detected by the vehicle-operating-state detection section, at step ST45. For example, when a yaw rate ($\gamma$1) has been detected by the vehicle-operating-state detection section 85, the angle-of-travel-direction calculation section 35 calculates an angle of travel direction ($\phi$2) by integrating the yaw rate once at step ST46.

Then, the navigation system failure detection/travel direction value selection section 81 compares the absolute angle of travel direction $\phi$ 1 and calculated angle of travel direction $\phi$ 2 at step ST47, to determine presence/absence of a failure in the communication navigation system at step ST 48. If the communication navigation system is operating normally as determined at step ST 48, the absolute angle of travel direction $\phi$ 1 is selected and output from the section 81 at step ST49, while, if the communication navigation system is out of order or suffering from a failure, the calculated angle of travel direction $\phi$ 2 is selected and output from the section 81 at step ST50.

Then, the road-wheel steering angle calculation section 33 determines an optimal road-wheel steering angle gain at step ST51, taking the vehicle velocity V etc. into account, such that the offset between the driver-designated angle of travel direction $\theta$ and the angle of travel directional $\phi$1 or $\phi$ 2 received from the section 81 is eliminated. At next step ST 52, the steering motor 22 is activated under control by the steering motor drive section 34 in accordance with the optimal road-wheel steering angle gain. Thus, the motor vehicle 27 is steered in response to the controlled operation of the steering motor 22, at step ST53.

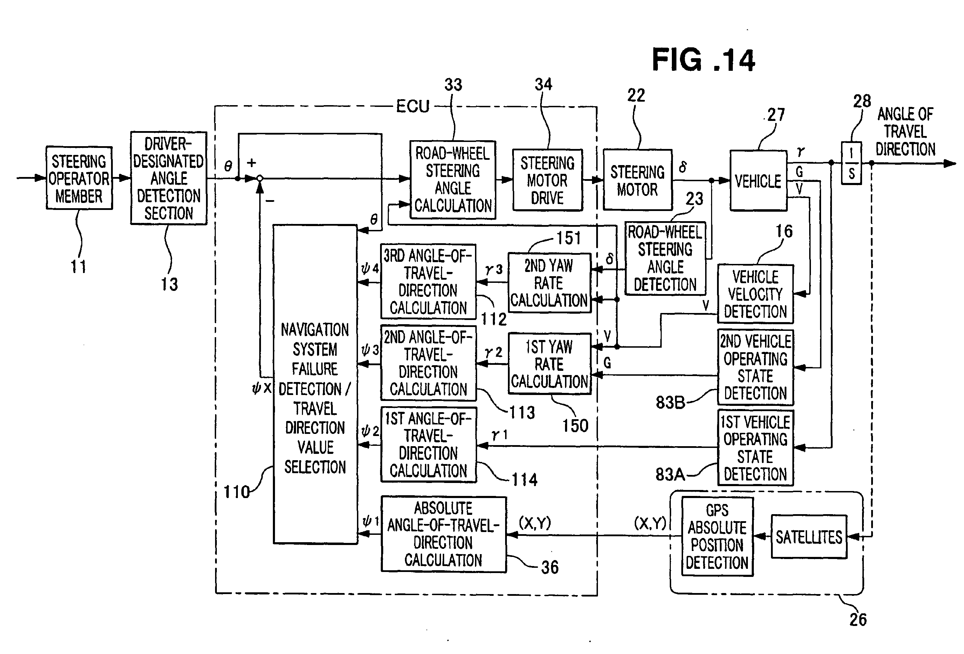

Next, a description will be given about a fifth embodiment of the steering apparatus, with primary reference to Fig. 14. Elements in Fig. 14 represented by the same reference numerals as in Fig. 2 are similar in structure and function to the corresponding elements in Fig. 2 and will not be described to avoid unnecessary duplication.

First yaw rate calculation section 150 calculates a yaw rate on the basis of a lateral acceleration value G detected by the lateral acceleration detection section and a vehicle velocity V detected by the vehicle velocity detection section 16, and a second angle-of-travel-direction calculation section 113 estimates an angle of travel direction $\phi$ 3. Further, a second yaw rate calculation section 151 calculates a yaw rate on the basis of a road-wheel steering angle $\delta$ detected by the actual road-wheel-steering-angle detection section 23, vehicle velocity V and vehicle parameter (such as a wheelbase), and a third angle-of-travel-direction calculation section 112 estimates an angle of travel direction $\phi$4. Then, the communication navigation system failure detection/travel direction value selection section 81 compares the absolute angle of travel direction $\phi$ 1 and the individual estimated yaw angle values $\phi$2, $\phi$3 and $\phi$ 4, so that any one of the angles $\phi$ 1, $\phi$ 2, $\phi$ 3 $\phi$ 4 is output as an angle of travel direction $\phi$x from the section 110. The road-wheel steering angle calculation section 33 determines an optimal road-wheel steering angle gain, taking the vehicle velocity V etc. into account, such that the offset between the driver-designated angle of travel direction $\theta$ and the angle of travel direction $\phi$ x received from the section 110 is eliminated. The steering motor 22 is controlled by the steering motor drive section 34 in accordance with the optimal road-wheel steering angle gain.

It should be appreciated that an abnormal condition or failure of the communication navigation system and controlled states of the motor vehicle 27 may be informed to the vehicle driver through a warning, visual display, steering resistive force, etc.

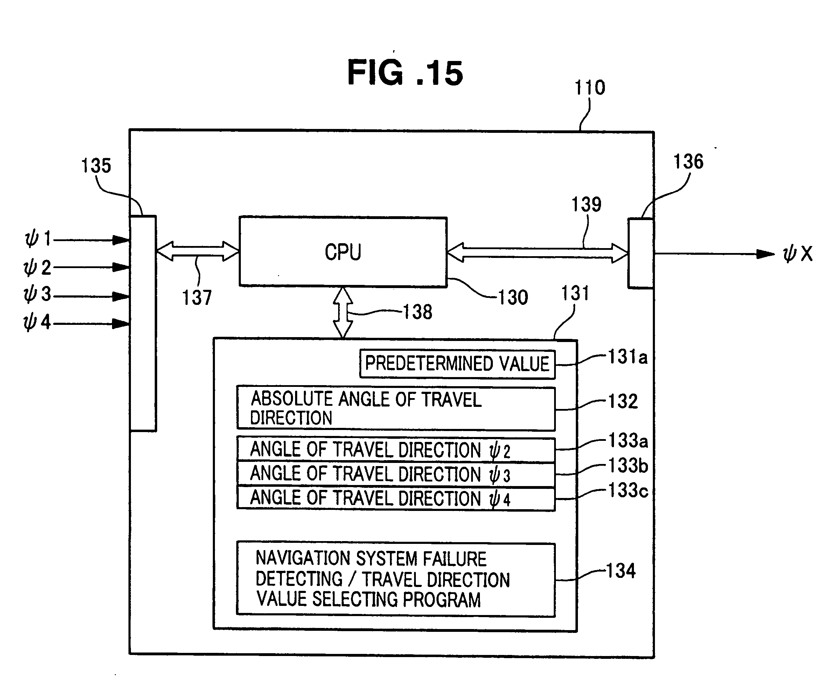

Fig. 15 is a diagram showing a specific example of the communication navigation system failure detection/ travel direction value selection section 110 in the fifth embodiment, which includes a CPU 130 and a memory 131. The memory 131 includes an absolute angel-of-travel-direction storage area 132, angel-of-travel-direction- storage areas 133a, 133b and 133c, and a program storage area 134 storing a program for performing a communication navigation system failure detecting/travel direction value selecting process.

Input interface section 135, output interface section 136, CPU 130 and memory 131 are connected via buses 137, 138 and 139. The input interface section 135 receives the angles of travel direction $\phi$ 2, $\phi$ 3 and $\phi$ 4 output from the angle-of-travel-direction calculation section 35 and absolute angle of travel direction $\phi$ 1 output from the absolute angle-of-travel-direction calculation section 36, and the output interface section 136 outputs a selected angle of travel direction $\phi$ x.

The angel-of-travel-direction storage areas 133a, 133b and 133c are provided for storing the angles of travel direction $\phi$ 2, $\phi$ 3 and $\phi$4, respectively, input via the input interface section 135. The absolute angel-of-travel-direction storage area 132 is provided for storing the absolute angle of travel direction $\phi$1 input via the input interface section 135.

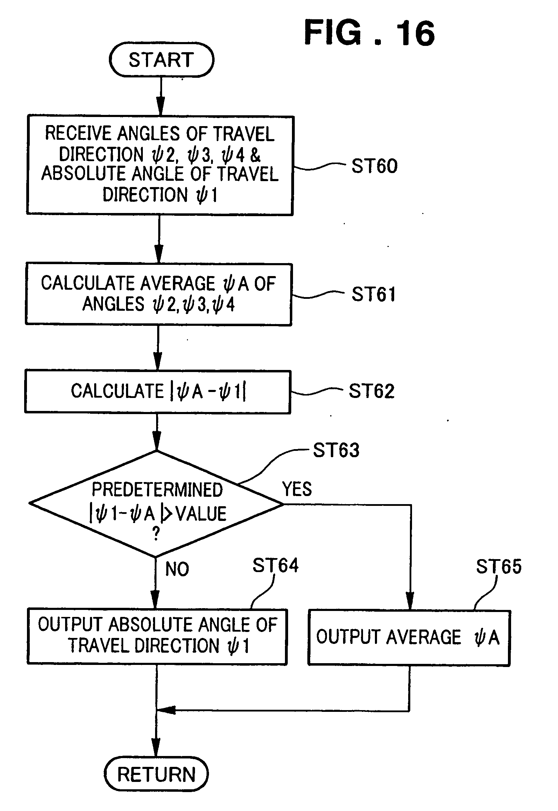

Fig. 16 is a flow chart showing an example step sequence of the navigation system failure detecting/travel direction value selecting process. First, at step ST60, angles of travel direction $\phi$ 2, $\phi$ 3 and $\phi$ 4 and absolute angle of travel direction $\phi$ 1 are input to the of the communication navigation system failure detection/travel direction value selection section 110 via the input interface section 135. The CPU 130 calculates an average $\phi$A of the input angles of travel direction $\phi$2, $\phi$3 and $\phi$4 at step ST61, and it calculates an absolute value of a difference between the average $\phi$A of the angles of travel direction and the absolute angle of travel direction $\phi$1 ($\phi$1 - $\phi$A), at step ST62. Then, at step ST63, the CPU 130 determines whether the absolute value of the difference is greater than a predetermined value stored in a storage area 131a. If the absolute value of the difference ($\phi$ 1 - $\phi$ A) is not greater than the predetermined value as determined at step ST63, the absolute angle of travel direction $\phi$ 1 is selected and output at step ST64 via the output interface section 136. If, on the other hand, the absolute value of the difference is greater than the predetermined value,

then the average $\phi A$ of the input angles of travel direction $\phi 2$, $\phi 3$ and $\phi 4$ is selected and output at step ST65. The above operations are repeated at predetermined time intervals as long as the ignition switch of the motor vehicle 27 is ON.

With the above-described operations, the communication navigation system failure detection/travel direction value selection section 110 instantly determines whether or not the communication navigation system is out of order or suffering from a failure. If the communication navigation system is not suffering from a failure, the section 111 outputs the absolute angle of travel direction $\phi 1$ to the offset calculation section, while, if the communication navigation system is not suffering from any failure, the section 110 outputs the average $\phi A$ of the input angles of travel direction $\phi 2$, $\phi 3$ and $\phi 4$.

In summary, the present invention arranged in the above-described manner can control an angle of travel direction of the vehicle with increased accuracy to constantly orient the vehicle in a safe direction. Further, with the control based on the second angle-of-travel-direction calculation section, the present invention can reliably prevent loss of steering angle control of the vehicle, great deviation of the actual angle of travel direction of the vehicle from the designated angle of travel direction and/or deviation of the vehicle from a road, thereby eliminating the need for correcting steering operation and reducing burdens on the vehicle driver.

In a steer-by-wire vehicle steering apparatus including a communication navigation (26) system capable of obtaining an absolute vehicleposition, a control device (25) controls a steering motor (22) in response to detection by a detection section (13, 17) in such a manner that an actual angle of travel direction of the vehicle and steering angle of a steering operator member agree with each other. Calculation section (36) calculates an angle of travel direction of the vehicle on the basis of the absolute vehicle position obtained via the navigation system, so that the drive section can be controlled more accurately on the basis of the calculated angle.

## Claims

1. A steer-by-wire steering apparatus for a vehicle (27) including a communication navigation system (26) capable of obtaining an absolute position of the vehicle, said steering apparatus comprising:

   a steering operator member (11) operatively connected to a steerable road wheel (24) via an electric wire;
   drive means (22) for steering the steerable road wheel, in response to operation of said steering operator member, via the electric wire;
   detection means (13, 17) for detecting a steering angle of said steering operator member and an angle of travel direction of the vehicle;
   angle-of-travel-direction calculation means (36) for calculating an angle of travel direction of the vehicle on the basis of the absolute position of the vehicle obtained via the communication navigation system; and
   control means (25) for controlling said drive means such that the angle of travel direction calculated by said angle-of-travel-direction calculation means agrees with the steering angle of said steering operator member.

2. A steer-by-wire steering apparatus as claimed in claim 1 which further comprises second angle-of-travel-direction calculation means (35) for calculating an angle of travel direction of the vehicle on the basis of an output of said detection means without using the absolute position of the vehicle obtained via the communication navigation system, and wherein, when the communication navigation system is out of order, said control section controls said drive section on the basis of the angle of travel direction calculated by said second angle-of-travel-direction calculation means (35).

## Patentansprüche

1. Steer-by-wire-Lenkvorrichtung für ein Fahrzeug (27) umfassend ein Kommunikationsnavigationssystem (26), welches imstande ist eine absolute Position des Fahrzeugs zu erhalten, wobei die Lenkvorrichtung umfasst:

   ein Bedienerlenkelement (11), welches betriebsmäßig mit einem steuerbaren Straßenrad (24) mittels eines elektrischen Drahtes verbunden ist;
   ein Antriebsmittel (22) zum Lenken des lenkbaren Straßenrads in Antwort auf ein Bedienen des Bedienerlenkelements mittels des elektrischen Drahtes;
   ein Detektionsmittel (13, 17) zum Detektieren eines Lenkwinkels des Bedienerlenkelements und eines Fahrtrichtungswinkels des Fahrzeugs; ein Fahrtrichtungswinkelberechnungsmittel (36) zum Berechnen eines Fahrtrichtungswinkels des Fahrzeugs auf Grundlage der mittels des Kommunikationsnavigationssystems erhaltenen absoluten Position des Fahrzeugs; und
   ein Steuer/Regelmittel (25) zum Steuern/Regeln des Antriebsmittels derart, dass der durch das Fahrtrichtungswinkelberechnungsmittel berechnete Fahrtrichtungswinkel mit dem Lenkwinkel des Bedienerlenkelements übereinstimmt.

2. Steer-by-wire-Lenkvorrichtung nach Anspruch 1, welche ferner ein zweites Fahrtrichtungswinkelberechnungsmittel (35) zum Berechnen eines Fahrtrichtungswinkels des Fahrzeugs auf Grundlage einer Ausgabe des Detektionsmittels ohne Verwendung der mittels dem Kommunikationsnavigationssystem erhaltenen absoluten Position des Fahrzeugs umfasst und wobei der Steuer/Regelabschnitt den Antriebsabschnitt auf Grundlage des durch das zweite Fahrtrichtungswinkelberechnungsmittel (35) berechneten Fahrtrichtungswinkels dann steuert/regelt, wenn das Kommunikationsnavigationssystem außer Betrieb ist.

**Revendications**

1. Système de direction de type direction par câble (Asteer-by-wire) pour un véhicule (27) comportant un système de navigation de communication (26) capable d'obtenir une position absolue du véhicule, ledit système de direction comprenant :

   un élément d'actionneur de direction (11) connecté fonctionnellement à une roue directrice (24) par l'intermédiaire d'un fil électrique ;
   un moyen d'entraînement (22) destiné à diriger la roue directrice, en réponse au fonctionnement dudit élément d'actionneur de direction, par l'intermédiaire du fil électrique ;
   un moyen de détection (13, 17) destiné à détecter un angle de braquage dudit élément d'actionneur de direction et un angle de direction de parcours du véhicule ;
   un moyen de calcul de l'angle de direction de parcours (36) destiné à calculer un angle de direction de parcours du véhicule sur la base de la position absolue du véhicule obtenue par l'intermédiaire du système de navigation et de communication ; et
   un moyen de commande (25) destiné à commander ledit moyen d'entraînement de telle sorte que l'angle de direction de parcours calculé par ledit moyen de calcul de l'angle de direction de parcours concorde avec l'angle de braquage dudit élément d'actionneur de direction.

2. Système de direction de type direction par câble selon la revendication 1, lequel comprend en outre un second moyen de calcul d'angle de direction de parcours (35) destiné à calculer un angle de direction de parcours du véhicule sur la base d'une sortie dudit moyen de détection sans utiliser la position absolue du véhicule obtenue par l'intermédiaire du système de navigation de communication, et dans lequel, lorsque le système de navigation de communication est en panne, ladite section de commande commande ladite section d'entraînement sur la base de l'angle de direction de parcours calculé par ledit second moyen de calcul et de direction de parcours (35).

EP 1 440 865 B1

# FIG . 1

ABSOLUTE VEHICLE POSITION DETECTION —20

MAP DATABASE —21

VEHICLE VELOCITY DETECTION —16

TRAVEL DIRECTION DETECTION —17

ECU

14

# FIG .2

EP 1 440 865 B1

# FIG .3

# FIG . 4

```
┌─────────┐
│  START  │
└─────────┘
     │
     ▼
┌─────────────────────┐
│  RECEIVE SIGNAL 20s │
│    INDICATIVE OF    │─── ST10
│  ABSOLUTE VEHICLE   │
│      POSITION       │
└─────────────────────┘
     │
     ▼
┌─────────────────────┐
│     READ OUT        │
│   LONGITUDE X &     │─── ST11
│    LATITUDE Y       │
└─────────────────────┘
     │
     ▼
┌─────────────────────┐
│      XI - XM        │─── ST12
└─────────────────────┘
     │
     ▼
┌─────────────────────┐
│      YI - YM        │─── ST13
└─────────────────────┘
     │
     ▼
┌─────────────────────┐
│  ψ'= tan⁻¹ YI-YM    │─── ST14
│            ─────    │
│            XI-XM    │
└─────────────────────┘
     │
     ▼
┌─────────────────────┐
│  OUTPUT SIGNAL 36s  │─── ST15
│   INDICATIVE OF ψ'  │
└─────────────────────┘
     │
     ▼
┌─────────────────────┐
│     UPDATE X & Y    │─── ST16
└─────────────────────┘
     │
     ▼
┌─────────┐
│ RETURN  │
└─────────┘
```

$$\psi'= \tan^{-1}\frac{YI-YM}{XI-XM}$$

FIG.5

FIG.6

# FIG .7

EP 1 440 865 B1

# FIG . 8

START

RECEIVE $\psi'$, ( X,Y ) , V & MAP DATA —— ST20

CALCULATE POSITION WHERE VEHICLE WILL BE PREDETERMINED TIME LATER —— ST21

READ OUT MAP DATA —— ST22

ST23

IS CALCULATED VEHICLE POSITION IN ROAD REPRESENTED BY MAP DATA ?

YES → RETURN

NO

SEND SIGNAL TO RESISTIVE FORCE CALCULATION SECTION —— ST24

OUTPUT WARNING SIGNAL —— ST25

OUTPUT SIGNAL TO BRAKE —— ST26

OUTPUT SIGNAL TO ACCELERATOR —— ST27

RETURN

# FIG .9

ECU

RESISTIVE FORCE GENERATING MOTOR — 14

RESISTIVE MOTOR DRIVE — 38

RESISTIVE FORCE CALCULATION — 37

STEERING OPERATOR MEMBER — 11

DRIVER-DESIGNATED ANGLE DETECTION SECTION — 13

ROAD-WHEEL STEERING ANGLE CALCULATION — 33

STEERING MOTOR DRIVE — 34

STEERING MOTOR — 22

VEHICLE — 27

ANGLE OF TRAVEL DIRECTION

FUTURE POSITION ESTIMATION/ SAFETY LEVEL ESTIMATION — 60

ABSOLUTE ANGLE-OF-TRAVEL-DIRECTION CALCULATION — 36

ABSOLUTE VEHICLE POSITION DETECTION

EXTERNAL ABSOLUTE VEHICLE-POSITION DETECTION — 26

MAP DATABASE

VEHICLE VELOCITY DETECTION — 16

EP 1 440 865 B1

22

# FIG .10

EP 1 440 865 B1

# FIG .11

EP 1 440 865 B1

# FIG . 12

```
            START
              │
              ▼
┌──────────────────────────────┐
│    RECEIVE ANGLE OF TRAVEL    │
│ DIRECTION ψ & ABSOLUTE ANGLE  │──── ST30
│   OF TRAVEL DIRECTION ψ'      │
└──────────────────────────────┘
              │
              ▼
      ┌─────────────────┐
      │   | ψ - ψ' |    │──── ST31
      └─────────────────┘
              │
              ▼
           ╱        ╲              ST32
          ╱          ╲          ┌──────
         ╱ PREDETERMINED╲  YES
         ╲    VALUE     ╱ ───────────────┐
          ╲     ?      ╱                 │
           ╲        ╱                    │
              │ NO        ST33           │        ST34
              ▼                          ▼
┌──────────────────────────┐   ┌──────────────────────┐
│ OUTPUT ABSOLUTE ANGLE OF │   │   OUTPUT ANGLE OF     │
│  TRAVEL DIRECTION ψ'     │   │  TRAVEL DIRECTION ψ   │
└──────────────────────────┘   └──────────────────────┘
              │                          │
              ▼◄─────────────────────────┘
           RETURN
```

# FIG .13

START

| DESIGNATION OF ANGLE OF TRAVEL DIRECTION | — ST40 |

| DETECT DESIGNATED ANGLE OF TRAVEL DIRECTION | — ST41 |

$\theta$

ST42

| RECEIVE GPS DATA |

ST45

| DETECT VEHICLE STATES (YAW RATE, SLIP ANGLE , LATERAL ACCELERATION , STEERING ANGLE , ETC.) |

ST43 — | DETECT VEHICLE POSITION FROM GPS DATA |

ST44 — | CALCULATE ABSOLUTE ANGLE OF TRAVEL DIRECTION (NAVI VALUE) |

| CALCULATE ANGLE OF TRAVEL DIRECTION ON THE BASIS OF VEHICLE SENSOR OUTPUTS (SENSOR VALUE) |

$\gamma 1, \beta, \cdots$
$G, V, \delta$

$\longrightarrow \gamma 2, \gamma 3$

— ST46

$\psi 2 (\psi 3, \psi 4)$

$\psi 1$

| COMPARE NAVI VALUE & SENSOR VALUE | — ST47 |

ST48

NAVI OUT OF ORDER ? — YES

ST49 — NO

SATELLITE

| OUTPUT ABSOLUTE ANGLE OF TRAVEL DIRECTION (NAVI VALUE) |

ST50

| OUTPUT ANGLE OF TRAVEL DIRECTION BASED ON SENSOR OUTPUTS (SENSOR VALUE) |

$\theta, \psi, X, V$

| DETERMINE OPTIMAL ROAD-WHEEL STEERING ANGLE GAIN | — ST51 |

| ACTIVATE STEERING MOTOR | — ST52 |

| MOTOR VEHICLE STEERED | — ST53 |

END

# FIG.14

# FIG .15

# FIG . 16

```
            ( START )
                |
                v
   ┌──────────────────────────┐
   │  RECEIVE ANGLES OF TRAVEL │
   │    DIRECTION ψ2, ψ3, ψ4 & │────── ST60
   │  ABSOLUTE ANGLE OF TRAVEL │
   │       DIRECTION ψ1        │
   └──────────────────────────┘
                |
                v
   ┌──────────────────────────┐
   │  CALCULATE AVERAGE ψA OF  │────── ST61
   │    ANGLES ψ2, ψ3, ψ4      │
   └──────────────────────────┘
                |
                v
   ┌──────────────────────────┐
   │    CALCULATE |ψA - ψ1|    │────── ST62
   └──────────────────────────┘
                |
                v
            ╱────────╲                ST63
          ╱ PREDETERMINED ╲   YES
         ⟨ |ψ1 - ψA|>VALUE ⟩─────────────────┐
          ╲      ?      ╱                     │
            ╲────────╱                        │
                | NO      ST64         ST65   │
                v                        ┌────┴────────────────┐
   ┌──────────────────────────┐          │                     │
   │  OUTPUT ABSOLUTE ANGLE OF │          v                     v
   │    TRAVEL DIRECTION ψ1    │   ┌──────────────────────────┐
   └──────────────────────────┘   │   OUTPUT AVERAGE  ψA      │
                |                  └──────────────────────────┘
                v                               |
                └───────────────┬───────────────┘
                                v
                           ( RETURN )
```

**FIG .17**
(PRIOR ART)